# EUROPÄISCHE PATENTSCHRIFT

(11) **EP 0 811 512 B1**
(45) Veröffentlichungstag und Bekanntmachung des Hinweises auf die Patenterteilung: **27.06.2001**
(21) Anmeldenummer: 97107488.5
(22) Anmeldetag: 07.05.1997
(51) Int. Cl.: B60G 9/02

(54) **Radaufhängung für ein Kraftfahrzeug**
Wheel suspension for a motor vehicle
Suspension de roue d'un véhicule automobile

(30) Priorität: 07.06.1996 DE 19622954
(43) Veröffentlichungstag der Anmeldung: 10.12.1997
(73) Patentinhaber: Dr.Ing.h.c. F. Porsche Aktiengesellschaft, 70435 Stuttgart (DE)
(72) Erfinder: Schote, Norbert, 72119 Ammerbuch (DE)

(56) Entgegenhaltungen:
- EP-A- 0 324 663

## Beschreibung

Die Erfindung bezieht sich auf eine Radaufhängung für ein Kraftfahrzeug mit einem Achsführungskörper nach dem Oberbegriff des Anspruchs 1.

Aus der DE 44 19 221 C1 ist eine Radaufhängung einer Hinterachse bekannt, die einen Achsführungskörper mit einem Zentrallager sowie einem Wattgestänge aufweist. Desweiteren ist aus der DE 44 22 875 A1 eine Aufhängung einer Hinterachse für ein Kraftfahrzeug mit einem steifen Achsführungskörper gemäβ dem Oberbegriff des Anspruchs 1 bekannt, der ein sich quer zur Fahrtrichtung erstreckendes Achsrohr mit endseitig gelagerten Rädern aufweist. Über ein mittig angeordnetes elastisches Lager ist das Achsrohr kardanisch am Fahrzeugaufbau angelenkt. Die freien Enden des Achsrohres sind mit einem Endstück versehen, an dem die Räder gelagert sind und die über Dreieckslenker miteinander verbunden sind, welche über ein Lager an einem biegesteifen Lenker gehalten werden der am Fahrzeugaufbau abgestützt ist.

Der Erfindung liegt die Aufgabe zugrunde, eine Radaufhängung für eine Hinterachse eines Kraftfahrzeuges zu schaffen, die einen einfachen Aufbau besitzt und gezielte Radstellungsänderungen bei auf das Rad einwirkenden Kräften sowie bei Ein- und Ausfederungsvorgängen zuläßt.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Radaufhängung aus einem U-förmigen Achsrohr gebildet wird, welches ein Mittenlager besitzt und mit den freien Enden von längsverlaufenden Achsrohren jeweils durch Querstreben verbunden werden, die aufbauseitig schwenkbeweglich angelenkt sind. Diese Querstreben bewirken eine Abstützung der Räder bei auf das Rad einwirkenden Kräften.

Das querverlaufende Achsrohr der Radaufhängung weist um das Mittenlager herum eine weiche Zone auf, damit bei Federungsvorgängen eine Biegung des Achsrohres in dieser Zone erfolgen kann. Diese Biegebewegung wird durch die Querstreben erforderlich, welche eine Zwangsführung der längsverlaufenden Achsrohre auf einer Kreisbahn bewirken.

Diese Biegebewegung des querverlaufenden Achsrohres bei Federungsvorgängen bewirkt eine Seitenkraftuntersteuerung und es sind durch entsprechende Anordnung der Lagerpunkte der Querstreben im Bereich der Fahrzeuglängsmittenachse am Fahrzeugaufbau sowie der abgekehrten Enden der Streben an den längsverlaufenden Achsrohren die Vorspuränderungen variierbar.

Die weiche Zone im querverlaufenden Achsrohr kann beispielsweise durch ein zwischengesetztes, hochgestelltes Federblatt gebildet werden oder durch gedrückte Rohrabschnitte. Denkbar ist aber auch, das Achsrohr so zu dimensionieren, daß eine Biegung eintreten kann.

Die Querstreben können je nach Bauart und vorhandenem Raum entweder aus Streben bestehen, die sich quer von einem längsverlaufenden Achsrohr bis zu einem außenliegenden Längsträgern des Fahrzeugaufbaus erstrecken oder aus Streben bestehen, die etwa in der Fahrzeuglängsmittenachse an einem Träger gelagert sind, der mit dem Fahrzeugaufbau verbunden ist.

Das Mittenlager ist als kardanisches elastisches Lager ausgeführt, so daß sich die Radaufhängung, bestehend aus dem U-förmigen Achsrohr hauptsächlich um eine Hochachse sowie um eine Querachse bewegen kann.

Zum Variieren der Vorspuränderungen, z.B. bei gegenläufigen Federungsvorgängen (Wanken), insbesondere wenn rechtes Rad ausfedert und linkes Rad einfedert, sind die Lagerungen der Querstreben entsprechend unterhalb oder oberhalb einer durch das Mittenlager verlaufenden horizontalen Ebene angeordnet.

Bei einem gleichseitigen Federn der Räder (beide federn aus oder ein) ist die Lage der beiden Querstreben in der Ansicht von hinten nach innen oben geneigt, wodurch eine positive Vorspuränderung entsteht, oder sie sind nach innen unten geneigt, wodurch eine negative Vorspuränderung entsteht.

Ausführungsbeispiele der Erfindung sind in der Zeichnung dargestellt und werden im folgenden näher beschrieben.

Es zeigen
- Fig. 1: eine schaubildliche Darstellung einer Hinterachse mit einer als Blattfeder ausgebildeten weichen Zone und zwei kurzen Querstreben,
- Fig. 2: eine weitere Ausführung einer Hinterachse mit zwei langen Querstreben,
- Fig. 3: eine schematische Darstellung eines Mittenlagers im Achsrohr und
- Fig. 4: eine weitere Ausführung des Achsrohres mit einer weichen Zone aus gedrückten Rohrabschnitten.

Die Radaufhängung 1 umfaßt im wesentlichen ein U-förmig gebogenes Rohr 2 mit einem etwa querverlaufenden Achsrohr 3 an dem sich zwei längsverlaufende Achsrohre 4 und 5 anschließen. An diesen Achsrohren 4 und 5 sind jeweils Radträger 6 zur Aufnahme von Rädern 7 gelagert.

Das Achsrohr 2 der Aufhängung 1 ist über ein elastisches Mittenlager 8 am Fahrzeugaufbau abgestützt. Dieses Lager 8 ermöglicht elastische Bewegungen um eine senkrechte Achse 9 und um eine horizontale Querachse 10 und entsprechenden Federbewegungen des Fahrzeugs.

Diese Querachse 10 dient als Drehachse bei einem gleichseitigen Einfedern. Die weitere Drehachse liegt in der Fahrzeuglängsmittenachse LM und wirkt beim gegenseitigen Einfedern (Wanken).

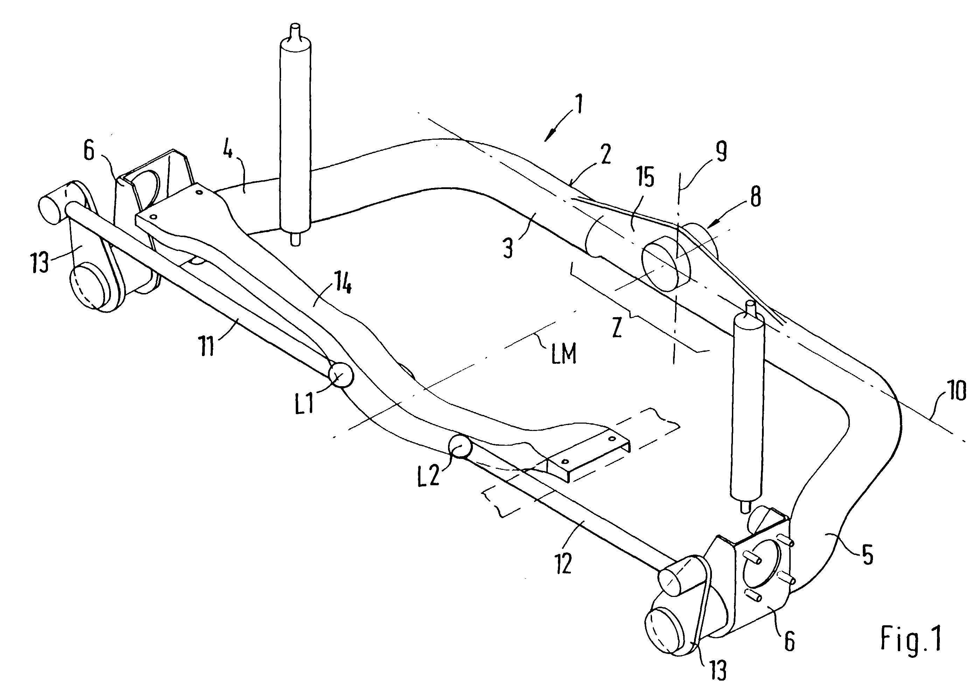

An den freien Enden der längsverlaufenden Achsrohre 4, 5 sind jeweils kurze Querstreben 11, 12 mit ihrem einen Ende über Lagerungen in einem Lagerbock 13 oder dergleichen schwenkbar gehalten und mit ihrem anderen abgekehrten freien Ende sind die Querstreben 11, 12 am Fahrzeugaufbau in Lagerungen L1, L2 schwenkbeweglich abgestützt. Diese Abstützung zum Fahrzeugaufbau hin kann auch unter Zwischenschaltung eines Querträgers 14 erfolgen, der mit dem Fahrzeugaufbau verbunden ist, wie Fig. 1 näher zeigt.

Das querverlaufende Achsrohr 3 der Aufhängung 1 weist im Bereich des Mittenlagers 8 eine biegeweiche Zone Z auf, damit bei Einfederungsvorgängen ein durch die Querstreben 11, 12 erzwungenes Zusammenziehen der längsverlaufenden Achsrohre 4, 5 und somit eine Biegung des querverlaufenden Achsrohres im Bereich der biegeweichen Zone erfolgen kann.

Die Lagerungen L1 und L2 der Querstreben 11, 12 am Querträger 14 können je nach erwünschter Vorspureinstellung höher oder tiefer zu einer durch das Mittenlager 8 verlaufenden horizontalen Ebene liegen.

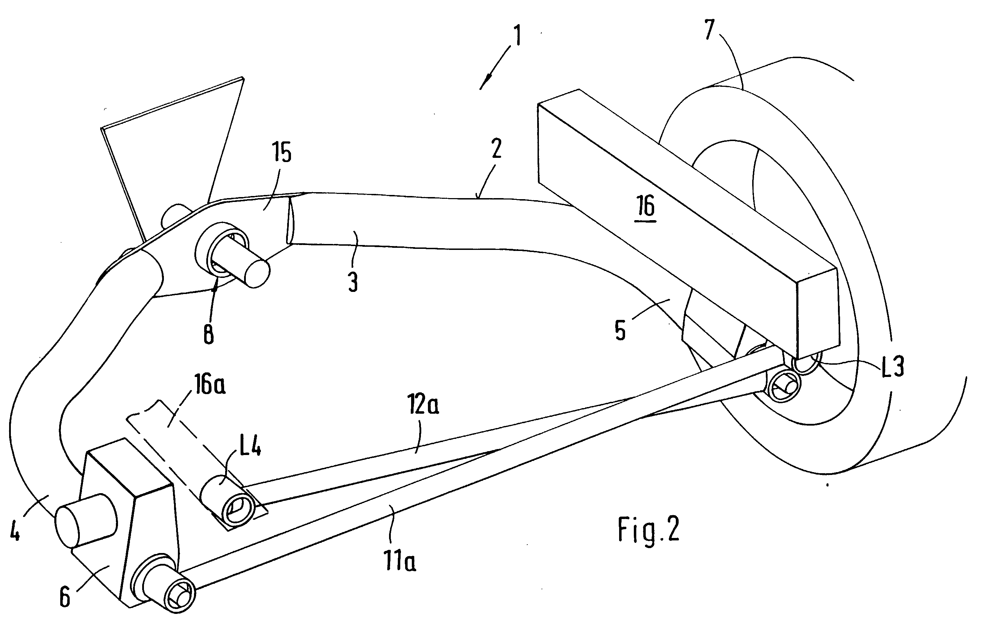

Nach einer weiteren Ausführung gemäß Fig. 2, können die Querstreben 11a, 12a auch von einer Radseite zur gegenüberliegenden Radseite geführt sein. Sie sind dann jeweils am gegenüberliegenden Längsträger 16 des Fahrzeugaufbaus bei L3 und L4 gelagert. Die relativ große Länge der Querstreben 11a, 12a im Vergleich zu den kürzeren Querstreben 11, 12 der weiteren Ausführung bedingt nur eine geringe Zusammenziehung des Achsrohres 3 in der biegeweichen Zone Z.

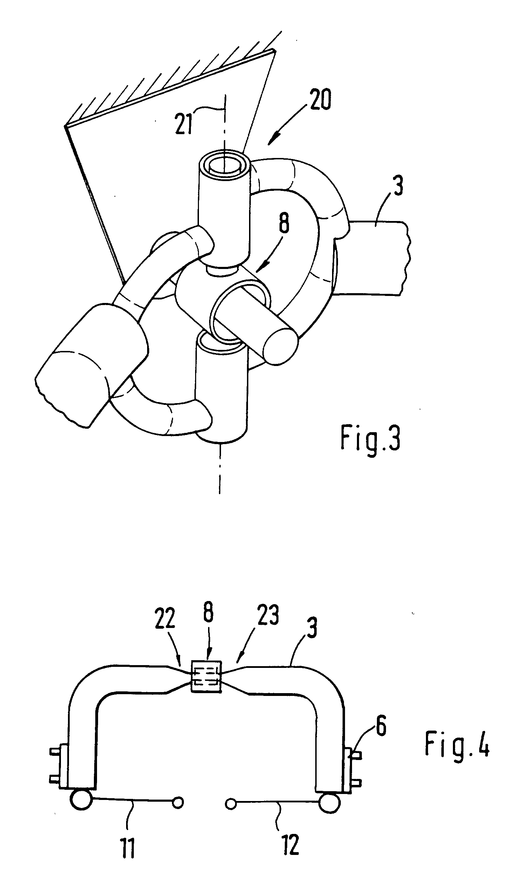

Die biegeweiche Zone Z wird durch eine hochkant gestellte Blattfeder 15 gebildet, die mittig das Lager 8 aufweist und endseitig jeweils mit dem Achsrohr 3 verbunden ist. Nach einer weiteren Ausführung gemäß Fig. 3 kann die biegeweiche Zone Z auch durch ein Lager 20 gebildet sein, das eine vertikale Achse 21 aufweist. Das Mittenlager 8 ist in diese biegeweiche Zone Z integriert. Desweiteren kann die biegeweiche Zone Z auch als gedrückte Rohrabschnitte 22, 23 zu beiden Seiten des Mittenlagers 8 ausgebildet sein. Denkbar ist aber auch ein Achsrohr, das so dimensioniert ist, daß sich eine biegweiche Zone Z aufgrund des Rohrdurchmessers ergibt.

## Patentansprüche

1. Radaufhängung für ein Kraftfahrzeug mit einem Achsführungskörper, der ein sich quer zur Fahrtrichtung erstrecktes Achsrohr und sich anschließende längserstreckende weitere Achsrohre umfaßt, an deren beiden Enden jeweils ein Rad gelagert ist und die über ein Feder-Dämpfer- Element zum Fahrzeugaufbau hin abgestützt sind, wobei das sich quererstreckende Achsrohr über ein Mittenlager kardanisch gelagert am Fahrzeugaufbau gehalten ist, dadurch gekennzeichnet, daß das sich quererstreckende Achsrohr (3) im Bereich des Mittenlagers (8) mindestens eine biegeweiche Zone (Z) aufweist und die freien Enden der sich längserstreckenden Achsrohre (4, 5) mit Querstreben (11, 12; 11a, 12a) schwenkbeweglich verbunden sind, die sich am Fahrzeugaufbau in Lagerungen (L1, L2; L3, L4) abstützen.

2. Radaufhängung nach Anspruch 1, dadurch gekennzeichnet, daß die Querstreben (11, 12) an einem aufbauseitig gehaltenen Träger (14) in Lagerungen (L1, L2) schwenkbeweglich abgestützt sind.

3. Radaufhängung nach den Ansprüchen 1 oder 2, dadurch gekennzeichnet, daß die Lagerungen (L1, L2) unmittelbar benachbart zu beiden Seiten einer Fahrzeuglängsmittenachse (LM) angeordnet sind.

4. Radaufhängung nach den Ansprüchen 1 oder 2, dadurch gekennzeichnet, daß die Querstreben (11a, 12a) sich von den freien Enden der sich längserstreckenden Achsrohre (4, 5) bis zu jeweils einem außenliegenden Längsträger (16, 16a) des Fahrzeugaufbaus erstrecken.

5. Radaufhängung nach Anspruch 1, dadurch gekennzeichnet, daß die biegeweiche Zone (Z) durch eine Blattfeder (15) gebildet wird, die das Mittenlager (8) zwischen sich aufnimmt und mit dem sich quererstreckenden Achsrohr (3) verbunden ist.

6. Radaufhängung nach Anspruch 1, dadurch gekennzeichnet, daß die biegeweiche Zone (Z) durch gedrückte Rohrabschnitte (22, 23) des sich quererstreckenden Achsrohres (3) gebildet wird.

7. Radaufhängung nach einem oder mehreren der vorhergehenden Ansprüche, dadurch gekennzeichnet, daß das Mittenlager (8) im Achsrohr (3) eine ausgeprägte Elastizität um eine vertikale Schwenkachse (9) sowie um eine horizontale Schwenkachse (10) aufweist.

8. Radaufhängung nach einem oder mehreren der vorhergehenden Ansprüche, dadurch gekennzeichnet, daß die freien Enden der Querstreben (11, 12; 11a, 12a) einen Lagerpunkt (L1, L2; L3, L4) am Querträger (14) bzw. am Fahrzeugaufbau Längsträger (16, 16a) aufweisen und die Lagerpunkte unterhalb bzw. oberhalb einer durch eine Lagerebene (Lager 8) verlaufenden horizontalen Ebene angeordnet sind.

## Claims

1. A wheel suspension for a motor vehicle with an axle-guiding member which comprises an axle tube extending transversely to the direction of travel and further adjoining axle tubes extending longitudinally, at the two ends of which a wheel is mounted respectively and which are supported with respect to the vehicle body by way of a spring-and-shock absorber member, wherein the transversely extending axle tube is held on the vehicle body whilst being mounted in a universally jointed manner by way of a middle bearing. **characterized in that** the transversely extending axle tube (3) has at least one flexurally yielding zone (**Z**) in the region of the middle bearing (8) and the free ends of the longitudinally extending axle tubes (4, 5) are connected pivotably movably to transverse struts (11, 12; 11a, 12a) supported in mountings (**L1**, **L2**; **L3**, **L4**) on the vehicle body.

2. A wheel suspension according to Claim 1, **characterized in that** the transverse struts (11, 12) are supported pivotably movably in mountings (**L1, L2**) on a support (14) held on the body.

3. A wheel suspension according to Claim I or 2. **characterized in that** the mountings (**L1**, **L2**) are arranged directly adjacent on both sides of a longitudinal median axis (**LM**) of the vehicle.

4. A wheel suspension according to Claim 1 or 2, **characterized in that** the transverse struts (11a, 12a) extend from the free ends of the longitudinally extending axle tubes (4, 5) to a respective outside longitudinal support (16, 16a) of the vehicle body.

5. A wheel suspension according to Claim 1, **characterized in that** the flexurally yielding zone (**Z**) is formed by a leaf spring (15) receiving the middle bearing (8) therewithin and connected to the transversely extending axle tube (3).

6. A wheel suspension according to Claim 1, **characterized in that** the flexurally yielding zone (**Z**) is formed by pressed portions (22, 23) of the transversely extending axle tube (3).

7. A wheel suspension according to one or more of the preceding Claims, **characterized in that** the middle bearing (8) in the axle tube (3) has a pronounced degree of resilience about a vertical pivot axis (9) and about a horizontal pivot axis (10).

8. A wheel suspension according to one or more of the preceding Claims, **characterized in that** the free ends of transverse struts (11, 12; 11a, 12a) have a [respective] bearing point (**L1**, **L2; L3**, **L4)** on the transverse support (14) or have longitudinal supports (16, 16a) on the vehicle body, and the bearing points are arranged below and above a horizontal plane extending through a bearing plane (bearing 8).

## Revendications

1. Suspension de roue pour véhicule automobile, comportant un corps de guidage d'essieu, qui comprend un tube d'essieu s'étendant transversalement à la direction de marche et, à la suite, d'autres tubes d'essieu s'étendant longitudinalement, à chacune des deux extrémités desquels est montée un roue et qui sont soutenus vers la carrosserie du véhicule, par l'intermédiaire d'un élément amortisseur à ressort, le tube d'essieu transversal, supporté à la Cardan par un palier central, étant maintenu sur la carrosserie du véhicule, caractérisée en ce que le tube d'essieu transversal (3) présente, dans la région du palier central (8), au moins une zone (Z) souple à la flexion, et en ce que les extrémités libres des tubes d'essieu longitudinaux (4,5) sont reliées mobiles à pivotement à des entretoises (11, 12 ; 11a, 12a) qui prennent appui contre la carrosserie du véhicule, dans des suspensions (L1, L2; L3, L4).

2. Suspension de roue selon la revendication 1, caractérisée en ce que les entretoises (11, 12) sont soutenues mobiles à pivotement, dans des suspensions (L1, L2), sur une poutre (14) fixée à la carrosserie.

3. Suspension de roue selon les revendications 1 ou 2, caractérisée en ce que les suspensions (L1, L2) sont disposées directement voisines, de part et d'autre d'un axe médian longitudinal (L, M) du véhicule.

4. Suspension de roue selon les revendications 1 ou 2, caractérisée en ce que les entretoises (11a, 12a) s'étendent depuis les extrémités libres des tubes d'essieu longitudinaux (4, 5) jusqu'à un longeron (16, 16a) extérieur respectif de la carrosserie du véhicule.

5. Suspension de roue selon la revendication 1, caractérisée en ce que la zone (Z) souple à la flexion est formée par un ressort à lames (15) qui reçoit le palier central (8) et qui est relié au tube d'essieu transversal (3).

6. Suspension de roue selon la revendication 1, caractérisée en ce que la zone (Z) souple à la flexion est formée par des portions (22, 23) enfoncées du tube d'essieu transversal (3).

7. Suspension de roue selon une ou plusieurs des revendications précédentes, caractérisée en ce que le palier central (8) dans le tube d'essieu (3) présente une élasticité marquée autour d'un axe de pivotement vertical (9) ainsi qu'autour d'un axe de pivotement horizontal (10).

8. Suspension de roue selon une ou plusieurs des revendications précédentes, caractérisée en ce que les extrémités libres des entretoises (11, 12; 11a, 12a) présentent un point d'appui (L1, L2; L3, L4) sur la poutre transversale (14) ou sur les longerons (16, 16a) de la carrosserie, et en ce que les points d'appui se situent au-dessous ou au-dessus d'un plan horizontal passant par un plan de palier (palier 8).
